Europäisches Patentamt

European Patent Office

Office européen des brevets

(19)

(11) Publication number: **0 297 074 B1**

(12) **EUROPEAN PATENT SPECIFICATION**

(45) Date of publication of patent specification: **09.12.92** (51) Int. Cl.⁵: **B01D 33/21**

(21) Application number: **88850226.7**

(22) Date of filing: **22.06.88**

(54) **Disc sector for rotary disc filter.**

(30) Priority: **24.06.87 SE 8702617**

(43) Date of publication of application:
**28.12.88 Bulletin 88/52**

(45) Publication of the grant of the patent:
**09.12.92 Bulletin 92/50**

(84) Designated Contracting States:
**AT CH DE ES FR GB IT LI NL SE**

(56) References cited:
**EP-A- 0 192 620**
**DE-B- 2 407 218**
**DE-C- 717 315**
**US-A- 3 917 534**
**US-A- 4 634 529**

(73) Proprietor: **Nilsson, Bjarne**
**Lanterngatan 9**
**S-462 00 Vänersborg(SE)**

(72) Inventor: **Nilsson, Bjarne**
**Lanterngatan 9**
**S-462 00 Vänersborg(SE)**

(74) Representative: **Modin, Jan et al**
**c/o Axel Ehrners Patentbyra AB Box 10316**
**S-100 55 Stockholm(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

The present invention relates to a disc sector for a rotary disc filter of the kind including a plurality of sectors assembled into an annular filter disc for filtering a liquid, said disc sector having a radially inner peripheral edge and a radially outer peripheral edge and including two mutually spaced plate-shaped elements having outer and inner surfaces, said outer surfaces being provided with a plurality of protrusions keeping a filter cloth spaced from said outer surfaces, said protrusions being spaced in a radial direction of said disc sector so as to allow liquid flow therebetween in directions other than said radial direction, said inner surface defining a compartment within said disc sector.

Rotatable filters of this kind are described, a.o., in the Patent Specification SE-C-8305817-2 (corresponding to EP-B1-0160069 and US-A-4 634 529). As is well known to one skilled in the art there is a disadvantage occurring in such filters which is usually called re-wetting or "backwash", meaning that the filtrate, which has not yet had time to leave the interior of a disc sector before the sub-pressure in the discharge conduit ceases, flows back again through the filter cloth. It is thus desirable that the interior volume of a disc sector is kept as small as possible, so that the least possible quantity of filtrate will be able to run back. To decrease the volume by making the space between the disc shaped elements small results in problems in strength, since a disc sector is subjected to both bending and torsion, as well as flow problems, since a relatively large area is required at the outlet end of the sector for enabling discharge of filtrate.

The object of the invention is consequently to provide a disc sector which solves or in any case mitigates the backwash problem without infringing on strength and flow requirements.

This has been achieved by the invention having been given the distinguishing features disclosed in the following claims.

DE-B2-24 07 218 discloses a disc sector including two mutually spaced plate-shaped elements and a radial discharge channel extending between the plate-shaped elements. The drainage channel communicates with the outlet of the sector, and the plate-shaped elements are provided with openings towards the channel. The plate-shaped elements of this sector are relatively thick, solid elements, thereby having a built-in rigidity needing no filling compound to achieve such rigidity. The protrusions defining the grooves of the disc sector do not have a limited radial extension. The drainage channel extends centrally through the sector. This means that the disc sector works satisfactory only until the radial drainage channel reaches the surface of the fluid to be filtered. After that, upon rotation of the filter disc, nothing happens until the sloping grooves pass the horizontal plane. This, in turn, means that on each disc sector filter cakes having different dry contents will be deposited.

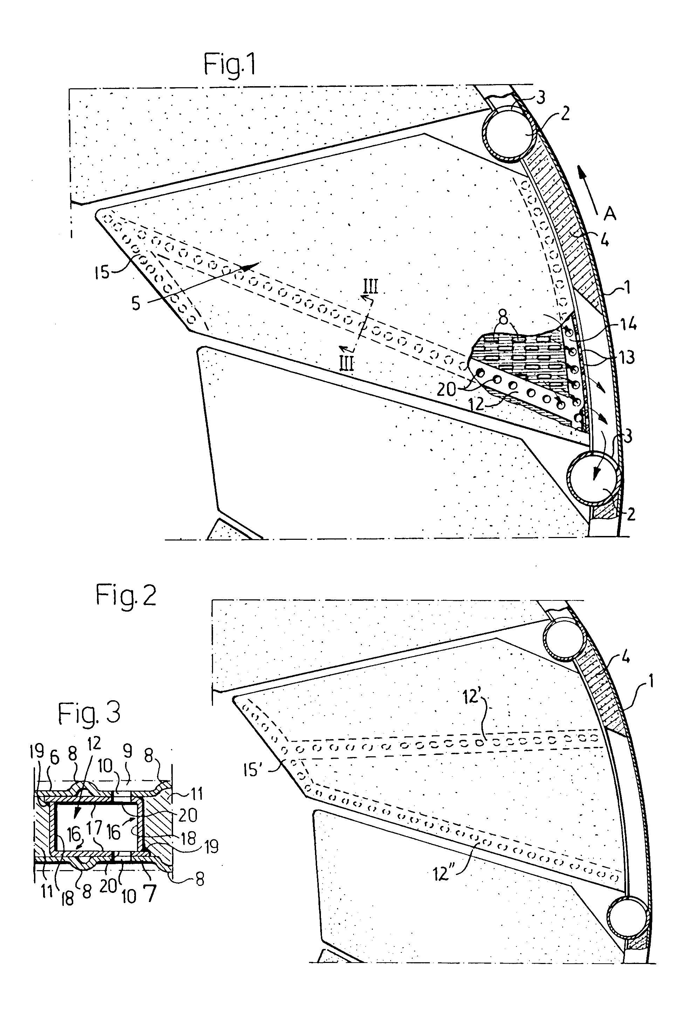

The invention will now be described with reference to the accompanying drawing, in which figure 1 illustrates a part of a filter rotor with a part of a filter disc put together from a plurality of disc sectors in accordance with the invention, one disc sector being illustrated with a portion cut away, fig. 2 illustrates in a similar way another embodiment of the invention, and fig. 3 is a section along the line III-III in fig. 1 to a larger scale.

In the drawing the numeral 1 denotes part of an annular filter disc holder, which is part of a filter rotor further including axially directed filtrate conduits 2. The filter disc holder 1 has a substantially U-shaped cross-section and is welded to the axially directed conduits 2. These have an opening 3 in the direction of rotation indicated by the arrow A, but are closed in the opposite direction. From the conduits 2 and a distance against the direction of rotation A, the interior of the filter disc holder 1 is closed off with a filling compound 4, or blocked in some other way from the remainder of the filter disc holder 1. There is communication between the non-filled interior of the filter disc holder 1 and the axially directed conduits 2 via the openings 3.

A disc sector 5 is mounted between two axially directed conduits 2 in the filter disc holder in a manner not more closely illustrated. This disc sector conventionally comprises two disc-shaped elements 6 and 7, which are provided on their outsides with protrusions 8, which keep a filter cloth 9 spaced from the respective element surface. In accordance with the invention, the protrusions 8 are discontinuous, i.e. they have restricted length and are preferably mutually displaced between adjacent rows of protrusions (see fig. 1). In this way, the filtrate can flow over the surfaces of the elements 6 and 7 in all directions. The elements 6 and 7 are provided with holes 10 for taking the filtrate flowing through the filter cloth 9 into the space between the elements 6 and 7.

In order to make the interior volume of the disc sector 5 as small as possible, the space between the elements 6 and 7 is filled in accordance with the invention with a hardened compound 11 (fig. 3). The compound 11 is preferably adhesive and has penetrated into the inside of the protrusions 8. Apart from the compound 11 filling out the interior of the disc sector 5, for the purpose of reducing volume, it gives the sector great resistance to compression caused by the sub-pressure provided in the sector during filtering. Since the compound 11 is also on the inside of the protrusions 8, great resistance to shear between the compound 11 and the elements 6 and 7 is achieved, and thus great rigidity and torsional resistance of the sector 5.

In order to ensure removal of filtrate from the spaces between the filter cloth 9 and the elements 6 and 7, in spite of the filling-out with the compound 11, at least one channel 12 is arranged inside the sector 5 between the elements 6 and 7, said channel being in communication with the spaces mentioned via the holes 10 and also opening out at the outer periphery of the sector, where there is communication between the unfilled portion of the filter disc holder 1 via radial holes 13.

In the embodiment illustrated in fig. 1, a channel 12 is arranged to extend approximately diagonally through the sector 5 and open out in the part of the sector last leaving the liquid which is to be filtered. There is thus achieved that the channel 12 is still sloping downward when the conduit 2 raises itself above the liquid level. An outer peripheral channel 14 and optionally an inner peripheral channel 15 may also be arranged further to the channel 12, the former two channels having communication both with the channel 12 and the space between the filter cloth 9 and the elements 6 and 7.

In the embodiment illustrated in fig. 2, two radial channels 12' and 12" are arranged, both of which have communication with an interior peripheral duct 15', the channel 12" extending along the trailing edge of the disc sector, as counted in the direction of rotation.

In an unillustrated embodiment of the invention a substantially diagonal channel, similar to the channel 12 according to fig. 1, and a substantially radial channel, similar to the channel 12" according to fig. 2, are arranged, both channels opening out at the outer periphery of the sector close to the axially directed conduit 2. However, neither outer nor inner peripheral ducts are arranged in this embodiment.

A preferred embodiment of a channel 12 is illustrated in fig. 3. This channel comprises two L-shaped sections 16, the legs 17 of which overlap the respective other legs 18 of the sections. Hereby the welds 19 can be located at the external angles between the legs 17 and 18. In the legs 17 are arranged holes 20 opposite the holes 10 in the elements 6 and 7. The holes 20 are preferably arranged close to the leg 18 which is uppermost when the sector 5 raises itself above the surface of the filtered liquid. Hereby the channel 12 under the holes 20 obtains the greatest possible capacity for removing filtrate.

**Claims**

1. A disc sector for a rotary disc filter of the kind including a plurality of such disc sectors (5) assembled into an annular filter disc for filtering a liquid, said disc sector having a radially inner peripheral edge and a radially outer peripheral edge and including two mutually spaced plate-shaped elements (6,7) having outer and inner surfaces, said outer surfaces being provided with a plurality of protrusions (8) keeping a filter cloth (9) spaced from said outer surfaces, said protrusions being spaced in a radial direction of said disc sector so as to allow liquid flow therebetween in directions other than said radial direction, said inner surfaces defining a compartment within said disc sector,
**characterized in**
   - that said compartment is completely filled with a hardened compound (11) adhering to said inner surfaces of said plate-shaped elements (6,7),
   - that at least one substantially radial drainage channel extends from said radially inner peripheral edge to said radially outer peripheral edge through said compound (11) between said inner surfaces of said plate-shaped elements (6,7), said drainage channel (12) communicating with an outlet of said disc sector,
   - that openings (10) are provided in said plate-shaped elements (6,7) to establish fluid communication between said outer surfaces and said drainage channel (12).

2. A disc sector as claimed in claim 1,
**characterized in** that a first drainage duct (14) is arranged along said outer peripheral edge of said disc sector (5), said drainage duct being in communication with said substantially radial drainage channel (12).

3. A disc sector as claimed in claim 1 or 2,
**characterized in** that a second drainage duct (15) is arranged along said inner peripheral edge of said disc sector (5), said second drainage duct being in communication with said substantially radial drainage channel (12).

4. A disc sector as claimed in any one of the preceding claims,
**characterized in** that said substantially radial drainage channel (12) extends substantially diagonally through said disc sector (5), a radially outward end of said substantially radial drainage channel (12) being located in a portion of said disc sector (5) last leaving said liquid upon rotation of said filter disc.

5. A disc sector as claimed in any one of the preceding claims,
**characterized in** that said protrusions (8) include voids in said inner surfaces of said plate-shaped elements, said hardened compound filling said voids.

6. A disc sector as claimed in any one of the preceding claims, **characterized in** that said substantially radial drainage channel (12) comprises a first and a second elongated member (16) each having a substantially L-shaped cross-section including a first and a second leg (18,17), said first and said second leg having longitudinally extending free edges, said two members (16) being interconnected such that said free edge of said first leg (18) of said first and said second member abuts said second leg (17) of said second and said first member, respectively, close to the respective said free edge thereof so as to form between said first and second member a laterally liquid-tight channel, holes (20) being provided in said second leg (17) of said first and said second member opposite to said openings (10) in said plate-shaped elements.

7. A disc sector as claimed in claim 6, **characterized in** that said first and second members (16) are welded together along said free edges of said first and second legs (18,17).

**Patentansprüche**

1. Sektor für einen Scheibendrehfilter des Typs, der eine Vielzahl von zu einer ringförmigen Filterscheibe zum Filtern einer Flüssigkeit zusammengesetzte Sektoren (5) aufweist, wobei der Scheibensektor eine radial innere umlaufende Kante und eine radial äußere umlaufende Kante und zwei im Abstand zueinander angeordnete plattenförmige Elemente (6, 7) aufweist, die äußere und innere Oberflächen haben, wobei die äußeren Oberflächen mit einer Vielzahl von Vorsprüngen (8) versehen sind, die ein Filtertuch (9) von der äußeren Oberfläche fernhalten, wobei die Vorsprünge in radialer Richtung des Scheibensektors so zueinander beabstandet sind, daß sie einen Flüssigkeitsfluß zwischen ihnen in von der radialen Richtung unterschiedlichen Richtung zulassen, wobei die innere Oberfläche einen Raum innerhalb des Scheibensektors begrenzt, dadurch gekennzeichnet,
   - daß der Raum vollständig mit ausgehärtetem Füllmaterial (11), das an den inneren Oberflächen des plattenförmigen Elemente (6, 7) haftet, gefüllt ist,
   - daß sich zumindest ein im wesentlichen radial verlaufender Drainagekanal von der radial inneren Umfangskante zu der radial äußeren Umfangskante durch das Füllmaterial (11) zwischen den inneren Oberflächen der plattenförmigen Elemente (6, 7) hindurch erstreckt, wobei der Drainagekanal (12) mit einem Auslaß des Scheibensektors in Verbindung steht,
   - daß in den plattenförmigen Elementen (6, 7) Öffnungen (10) vorgesehen sind, die eine Strömungsverbindung zwischen den äußeren Oberflächen und dem Drainagekanal (12) herstellen.

2. Sektor nach Anspruch 1, dadurch gekennzeichnet, daß eine erste Drainageleitung (14) längs der äußeren Umfangskante des Scheibensektors (5) angeordnet ist, wobei diese Drainageleitung mit dem im wesentlichen radial verlaufenden Drainagekanal (12) in Verbindung steht.

3. Sektor nach Anspruch 1 oder 2, dadurch gekennzeichnet, daß längs der inneren Umfangskante des Scheibensektors (5) eine zweite Drainageleitung (15) angeordnet ist, wobei die zweite Drainageleitung mit dem im wesentlichen radial verlaufenden Drainagekanal (12) in Verbindung steht.

4. Sektor nach einem der vorhergehenden Ansprüche, dadurch gekennzeichnet, daß sich der im wesentlichen radial verlaufende Drainagekanal (12) diagonal durch den Sektor (5) hindurch erstreckt, wobei ein radial äußeres Ende des im wesentlichen radial verlaufenden Drainagekanals (12) in einem Abschnitt des Sektors (5) angeordnet ist, der bei Drehung des Scheibenfilters die Flüssigkeit als letzter verläßt.

5. Sektor nach einem der vorhergehenden Ansprüche, dadurch gekennzeichnet, daß die Vorsprünge (8) Hohlräume in der inneren Oberfläche der plattenförmigen Elemente umschließen, wobei diese Hohlräume durch ausgehärtetes Füllmaterial gefüllt sind.

6. Sektor nach einem der vorhergehenden Ansprüche, dadurch gekennzeichnet, daß der im wesentlichen radial verlaufende Drainagekanal (12) erste und zweite langgestreckte Teile (16) enthält, die jeweils einen im wesentlichen L-förmigen Querschnitt mit einem ersten und einem zweiten Schenkel (18, 17) aufweisen, wobei die ersten und zweiten Schenkel längs verlaufende freie Kanten haben und die Teile (16) so miteinander verbunden sind, daß die freie Kante des ersten Schenkels (18) der ersten und zweiten Teile an die zweiten Schenkel (17) der zweiten und ersten Teile anstoßen und zwar nahe der jeweils freien Kante derselben, wodurch zwischen den ersten und zweiten Teilen ein seitlicher, flüssigkeitsdichter Kanal gebildet wird und wobei in dem zweiten Schenkel (17) der ersten und zweiten Teile gegenüberliegend zu den Öffnungen (10) in den plattenförmigen Elementen Löcher (20) vorgesehen sind.

7. Sektor nach Anspruch 6, dadurch gekennzeichnet, daß die ersten und zweiten Teile (16) längs der freien Kanten der ersten und zweiten Schenkel (18, 17) miteinander verschweißt sind.

**Revendications**

1. Secteur filtrant pour filtre rotatif à disques du type comprenant une pluralité de ces secteurs filtrants (5) assemblés en un disque filtrant annulaire pour filtrer un liquide, ledit secteur filtrant comportant un bord périphérique interne radialement et un bord périphérique externe radialement et comprenant deux éléments en forme de plaque (6, 7) espacés l'un de l'autre comportant des surfaces externes et internes, lesdites surfaces externes étant dotées d'une pluralité de projections (8) maintenant un tissu filtrant (9) espacé desdites surfaces externes, lesdites projections étant espacées dans une direction radiale dudit secteur filtrant de manière à permettre l'écoulement du liquide entre elles dans des directions autres que ladite direction radiale, lesdites surfaces internes formant un compartiment au sein dudit secteur filtrant, caractérisé en ce que
   - ledit compartiment est complètement rempli d'une composition durcie (11) adhérant auxdites surfaces internes desdits éléments en forme de plaque (6, 7),
   - au moins un canal de décharge sensiblement radial s'étend dudit bord périphérique interne radialement audit bord périphérique externe radialement à travers ladite composition (11) entre lesdites surfaces internes desdits éléments en forme de plaque (6, 7), ledit canal de décharge (12) communiquant avec une sortie dudit secteur filtrant,
   - des ouvertures (10) sont ménagées dans lesdits éléments en forme de plaque (6, 7) pour établir une communication de fluide entre lesdites surfaces externes et ledit canal de décharge (12).

2. Secteur filtrant selon la revendication 1, caractérisé en ce qu'un premier canal de décharge (14) est disposé le long dudit bord périphérique externe dudit secteur filtrant (5), ledit canal de décharge étant en communication avec ledit canal de décharge sensiblement radial (12).

3. Secteur filtrant selon la revendication 1 ou 2, caractérisé en ce qu'un second canal de décharge (15) est disposé le long dudit bord périphérique interne dudit secteur filtrant (5), ledit second canal de décharge étant en communication avec ledit canal de décharge sensiblement radial (12).

4. Secteur filtrant selon l'une quelconque des revendications précédentes, caractérisé en ce que ledit canal de décharge sensiblement radial (12) s'étend sensiblement en diagonale en travers dudit secteur filtrant (5), une extrémité externe radialement dudit canal de décharge sensiblement radial (12) étant située dans une portion dudit secteur filtrant (5) laissant en dernier ledit liquide lors de la rotation dudit disque de filtre.

5. Secteur filtrant selon l'une quelconque des revendications précédentes, caractérisé en ce que lesdites projections (8) comprennent des vides dans lesdites surfaces internes desdits éléments en forme de plaque, ladite composition durcie remplissant lesdits vides.

6. Secteur filtrant selon l'une quelconque des revendications précédentes, caractérisé en ce que ledit canal de décharge sensiblement radial (12) comprend un premier et un second élément allongé (16) présentant chacun une section transversale sensiblement en forme de L comprenant une première et une seconde branche (18, 17), ladite première et ladite seconde branche comportant des bords libres s'étendant longitudinalement, lesdits deux éléments (16) étant mutuellement reliés de manière que ledit bord libre de ladite première branche (18) dudit premier et dudit second élément bute contre ladite seconde branche (17) dudit second et dudit premier élément, respectivement, près dudit bord libre respectif de ceux-ci de manière à former entre ledit premier et ledit second élément un canal étanche aux liquides latéralement, des trous (20) étant ménagés dans ladite seconde branche (17) dudit premier et dudit second élément en face desdites ouvertures (10) dans lesdits éléments en forme de plaque.

7. Secteur filtrant selon la revendication 6, caractérisé en ce que ledit premier et ledit second élément (16) sont soudés l'un à l'autre le long desdits bords libres desdites première et seconde branches (18, 17).

Fig.1

Fig. 2

Fig. 3